# EUROPÄISCHE PATENTANMELDUNG

(11) **EP 3 594 456 A1**
(43) Veröffentlichungstag der Anmeldung: **15.01.2020**
(21) Anmeldenummer: 19185009.8
(22) Anmeldetag: 08.07.2019
(51) Int. Cl.: F01D 17/04, F01D 17/16, F01D 17/20

(54) **VERSTELLEINRICHTUNG UND VERFAHREN ZUR VERSTELLUNG EINES LEITGITTERS EINER TURBOMASCHINE**

(30) Priorität: 11.07.2018 DE 102018211535
(71) Anmelder: MTU Aero Engines AG, 80995 München (DE)
(72) Erfinder: Böck, Alexander, 82288 Kottgeisering (DE)

(57) **Zusammenfassung**

Die vorliegende Erfindung betrifft eine Verstelleinrichtung zur Verstellung von Leitschaufeln (1) eines Leitgitters einer Turbomaschine, insbesondere einer Turbinen- oder Verdichterstufe einer Gasturbine, wobei die Verstelleinrichtung einen Koppelring (2) zur Ankopplung der Leitschaufeln und wenigstens zwei Aktuatoren (10) zum Verdrehen des Koppelrings aufweist, die mit dem Koppelring verbunden sind (11), wobei wenigstens einer dieser Aktuatoren eine Trennkupplung (14) aufweist.

## Beschreibung

Die vorliegende Erfindung betrifft eine Verstelleinrichtung zur Verstellung von Leitschaufeln eines Leitgitters einer Turbomaschine, insbesondere einer Turbinen- oder Verdichterstufe einer Gasturbine, ein Leitgitter für eine Turbomaschine, insbesondere Gasturbine, mit der Verstelleinrichtung, eine Turbomaschine, insbesondere Gasturbine, mit dem Leitgitter und ein Verfahren zur Verstellung von Leitschaufeln des Leitgitters sowie eine Steuerung zur Durchführung des Verfahrens.

Aus der EP 3 101279 A1 ist eine Verstelleinrichtung zur Verstellung von Leitschaufeln eines Leitgitters einer Turbomaschine mit zwei Aktuatoren bekannt, die jeweils zwei redundante Motoren und ein Differentialgetriebe aufweisen, das die Eintriebsdrehzahlen der beiden Motoren zu einer Abtriebsdrehzahl eines Differentialgetriebes addiert, der die Leitschaufeln verstellt. Bei Ausfall eines Motors eines Aktuators wird dieser durch eine Bremse stillgesetzt.

Eine Aufgabe einer Ausführung der vorliegenden Erfindung ist es, eine Verstellung von Leitschaufeln eines Leitgitters einer Turbomaschine zu verbessern.

Diese Aufgabe wird durch eine Verstelleinrichtung mit den Merkmalen des Anspruchs 1 bzw. ein Verfahren mit den Merkmalen des Anspruchs 9 gelöst. Ansprüche 7, 8 und 11 stellen ein Leitgitter bzw. eine Turbomaschine mit (wenigstens) einer hier beschriebenen Verstelleinrichtung bzw. eine Steuerung zur Durchführung eines hier beschriebenen Verfahrens unter Schutz. Vorteilhafte Ausführungsformen der Erfindung sind Gegenstand der Unteransprüche.

Nach einer Ausführung der vorliegenden Erfindung weist eine Verstelleinrichtung zur Verstellung von Leitschaufeln eines Leitgitters einer Turbomaschine, insbesondere einer Turbinen- oder Verdichterstufe einer Gasturbine, einen Koppelring, an den die Leitschaufeln, in einer Ausführung (jeweils) durch einen Schaufel-Hebelmechanismus, angekoppelt sind bzw. der hierzu vorgesehen, insbesondere eingerichtet ist bzw. verwendet wird, und wenigstens zwei Aktuatoren, in einer bevorzugten Ausführung wenigstens drei Aktuatoren, in einer besonders bevorzugten Weiterbildung vier oder mehr Aktuatoren, auf, die, in einer Ausführung jeweils über einen Aktuator-Hebelmechanismus, mit dem Koppelring verbunden sind und (gemeinsam) den Koppelring verdrehen, um so die Leitschaufeln zu verstellen, bzw. die hierzu vorgesehen, insbesondere eingerichtet sind bzw. verwendet werden.

Durch wenigstens zwei Aktuatoren kann in einer Ausführung vorteilhaft eine Verstelllast verteilt werden.

Durch wenigstens drei Aktuatoren kann in einer Ausführung eine vorteilhafte Zentrierung, insbesondere eine Speichenzentrierung, des Koppelrings realisiert werden.

Durch drei bzw. vier und insbesondere durch mehr als vier Aktuatoren kann in einer Ausführung vorteilhaft eine statische Überbestimmtheit, insbesondere eine statische überbestimmte (Speichen)Zentrierung, des Koppelrings realisiert und so besonders vorteilhaft ein Ausfall eines der Aktuatoren detektiert werden.

In einer Ausführung sind die Aktuatoren äquidistant über einen Umfang um die (Haupt)Maschinenachse der Turbomaschine bzw. des Leitgitters verteilt. Hierdurch kann in einer Ausführung eine Verstelllast besonders vorteilhaft verteilt werden.

Nach einer Ausführung der vorliegenden Erfindung weisen ein oder mehrere, vorzugsweise alle, dieser Aktuatoren (jeweils) eine Trennkupplung auf.

Hierdurch kann in einer Ausführung ein Kraftfluss in einem defekten Aktuator unterbrochen werden, so dass im Unterschied zur eingangs genannten EP 3 101 279 A1 der defekte Aktuator nicht gebremst werden muss. Zusätzlich oder alternativ kann im Unterschied zur eingangs genannten EP 3 101279 A1 auch bei blockierendem (Gesamt)Antrieb eines Aktuators der Koppelring durch den bzw. die restlichen Aktuators verstellt werden. Zusätzlich oder alternativ kann in einer Ausführung die Verstelleinrichtung hierdurch leicht und/oder kompakt bauen, insbesondere leicht(er) und/oder kompakt(er) als die aus der EP 3 101 279 A1 bekannte.

Die Leitschaufeln sind in einer Ausführung jeweils um eine Schaufelachse verdrehbar (gelagert) bzw. werden durch Verdrehen, in einer Ausführung um eine Rotations- bzw. Hauptmaschinenachse der Turbomaschine, des Koppelrings verstellt bzw. -dreht, insbesondere durch die mit den Schaufeln und dem Koppelring verbundenen Schaufel-Hebelmechanismen.

Hierdurch kann in einer Ausführung eine besonders vorteilhafte, insbesondere kompakte, leichte, zuverlässige und/oder präzise Verstellung realisiert werden.

Ein oder mehrere der Aktuatoren weisen in einer Ausführung (jeweils) einen, insbesondere elektrischen, vorzugsweise elektromotorischen, hydraulischen und/oder pneumatischen Antrieb, in einer Ausführung einen oder mehrere Elektromotoren, vorzugsweise Schrittmotor(en), und/oder wenigstens ein Getriebe, insbesondere ein Untersetzungsgetriebe, welches eine Antriebs- bzw. Getriebeeintriebsdrehzahl in eine langsamere Getriebeabtriebs- bzw. Aktuatorausgangsdrehzahl umsetzt, auf. Das Getriebe weist in einer Ausführung ein Harmonic-Drive-Getriebe und/oder ein Übersetzungsverhältnis von wenigstens 1:50 und/oder höchstens 1:200 auf und/oder ist ein, wenigstens im Wesentlichen, spielfreies Getriebe. Der Schrittmotor weist in einer Ausführung eine Schrittweite von wenigstens 0,5° und/oder höchstens 5° auf. Der Koppelring bzw. die Verstelleinrichtung weist in einer Ausführung einen Verstell- bzw. -drehbereich von wenigstens 2,5° und/oder höchstens 20° und/oder eine Verstellgenauigkeit von wenigstens 2° und/oder höchstens 0,01° auf.

Hierdurch kann in einer Ausführung eine besonders vorteilhafte, insbesondere (noch) kompakte(re), leichte(re), zuverlässige(re) und/oder präzise(re) Verstellung realisiert werden.

Unter einer Trennkupplung wird vorliegend insbesondere in fachüblicher Weise eine Einrichtung zum Unterbrechen eines Kraft-, insbesondere Drehmomentflusses innerhalb des Aktuators bzw. zu dem Koppelring, insbesondere während eines Betriebs der Turbomaschine, verstanden. Mit anderen Worten ist bzw. wird in einer Ausführung ein Aktuator bzw. dessen Antrieb durch Öffnen der Trennkupplung vom Koppelring ausklinkbar bzw. ausgeklinkt bzw. hierzu eingerichtet bzw. verwendet. Die Trennkupplung ist in einer Ausführung zwischen dem Antrieb oder Getriebe und einem Abtrieb, insbesondere dem Aktuator-Hebelmechanismus, bzw. einer Kopplung des jeweiligen Aktuators mit dem Koppelring angeordnet.

In einer Ausführung ist bzw. wird der Koppelring, insbesondere in einem Gehäuse der Turbomaschine und/oder durch die wenigstens drei, insbesondere vier oder mehr, Aktuatoren, zentriert, in einer Ausführung speichenzentriert. Hierzu ist der Koppelring in einer Ausführung an den Aktuatoren bzw. deren Abtrieben, insbesondere Aktuator-Hebelmechanismen, radial verschieblich gelagert, in einer Ausführung (jeweils) um eine oder mehrere Achsen drehbar, insbesondere (jeweils) durch eine Kugel.

Hierdurch kann in einer Ausführung die Verstelleinrichtung leicht und/oder kompakt bauen. Zusätzlich oder alternativ können hierdurch mechanisch und/oder thermisch induzierte Lasten vorteilhaft ausgeglichen werden.

In einer Ausführung wird eine Trennkupplung eines oder mehrerer der Aktuatoren (jeweils) aktiv, insbesondere elektrisch, hydraulisch oder pneumatisch, geöffnet und/oder geschlossen, in einer Ausführung durch ein, insbesondere elektrisch(betätigt)es, hydraulisch(betätigtes oder pneumatisch(betätigtes Stellmittel, bzw. ist hierzu eingerichtet bzw. wird hierzu verwendet.

Zusätzlich oder alternativ wird in einer Ausführung eine Trennkupplung eines oder mehrerer der Aktuatoren (jeweils) lastfrei und/oder unter Last geöffnet und/oder geschlossen bzw. ist hierzu eingerichtet bzw. wird hierzu verwendet.

Hierdurch können in einer Ausführung Lasten vorteilhaft, insbesondere variabel, rasch und/oder gezielt, verteilt und/oder defekte Antriebe selektiv abgekoppelt bzw. ausgeklickt werden.

In einer Ausführung wird eine Last, insbesondere Torsions-, Biege- und/oder Zug- und/oder Druckspannung, in wenigstens einer Kopplung zwischen einem der Aktuatoren und dem Koppelring, insbesondere in den Kopplungen zwischen (den) wenigstens zwei, in einer Ausführung wenigstens drei, insbesondere wenigstens vier, (der) Aktuatoren und dem Koppelring, (jeweils) durch einen Lastsensor erfasst bzw. sind ein oder mehrere Lastsensoren hierzu vorgesehen, insbesondere eingerichtet, bzw. werden hierzu verwendet.

Zusätzlich oder alternativ wird in einer Ausführung eine Last, insbesondere ein Drehmoment, in wenigstens einem der Aktuatoren, insbesondere in (den) wenigstens zwei, in einer Ausführung wenigstens drei, insbesondere wenigstens vier, (der) Aktuatoren, (jeweils) durch einen Lastsensor erfasst bzw. sind ein oder mehrere Lastsensoren hierzu vorgesehen, insbesondere eingerichtet, bzw. werden hierzu verwendet.

Hierdurch kann in einer Ausführung (jeweils) vorteilhaft ein Defekt eines Aktuators detektiert werden, insbesondere, wie vorstehend ausgeführt, bei einer statisch überbestimmten (Speichen)Zentrierung mit wenigstens drei bzw. vier Aktuatoren.

Nach einer Ausführung der vorliegenden Erfindung werden zwei oder mehrere, vorzugsweise alle, der Aktuatoren auf Basis erfasster Stellungen der Aktuatoren und/oder Lasten in den Aktuatoren und/oder Kopplungen zwischen den Aktuatoren und dem Koppelring gesteuert, insbesondere geregelt.

Hierdurch können in einer Ausführung Lasten vorteilhaft ausgeglichen werden.

Zusätzlich oder alternativ wird wenigstens eine Trennkupplung eines der Aktuatoren geöffnet, falls ein vorgegebener, insbesondere fehlerhafter, Zustand dieses Aktuatoren erfasst oder prognostiziert wird, insbesondere auf Basis der erfassten Stellung(en) eines oder mehrerer der Aktuatoren und/oder der erfassten Last(en) in einem oder mehreren der Aktuatoren und/oder in einer oder mehreren der Kopplungen zwischen den Aktuatoren und dem Koppelring, insbesondere der erfassten Stellung des jeweiligen Aktuators bzw. der erfassten Last in dem jeweiligen Aktuator bzw. der Kopplungen zwischen dem jeweiligen Aktuator und dem Koppelring.

Blockiert beispielsweise ein Antrieb oder Getriebe eines Aktuators bei geschlossener Trennkupplung, so bewirkt eine Verdrehung des Koppelrings durch die anderen Aktuatoren eine (zunehmende bzw. starke) Verspannung in der Kopplung zwischen dem fehlerhaften Aktuator und dem Koppelring. Somit kann durch den entsprechenden Lastsensor ein solcher fehlerhafter Zustand erfasst und entsprechend die Trennkupplung geöffnet werden.

Insbesondere infolge einer (Soll-)Verstellung der Leitschaufeln durch die Aktuatoren wirken in den Aktuatoren bzw. Kopplungen entsprechende Lasten. Diese streuen zwischen den einzelnen Aktuatoren bzw. Kopplungen zwar, jedoch bei fehlerfreien Aktuator innerhalb eines bestimmten Toleranzbereichs bzw. einer bestimmten Bandbreite. Bei einem fehlerhaften Aktuator überschreitet eine solche Last hingegen einen solchen (zulässigen) Toleranzbereich bzw. eine solche (zulässige) Bandbreite.

Entsprechend wird in einer Ausführung ein bzw. der vorgegebene(r) Zustand eines Aktuators erfasst (und entsprechend dessen Trennkupplung geöffnet), falls eine erfasste Last in diesem Aktuator und/oder falls eine erfasste Last in der Kopplung zwischen diesem Aktuator und dem Koppelring außerhalb eines vorgegebenen Toleranzbereichs, insbesondere eines vorgegebenen Toleranzbereichs um eine Referenzlast, liegt bzw. einen vorgegebenen Toleranzbereich bzw. eine vorgegebenen Bandbreite überschreitet.

Der Toleranzbereich kann in einer Ausführung empirisch und/oder auf Basis einer Simulation vorgegeben werden bzw. sein. Die Referenzlast kann in einer Ausführung, insbesondere in Abhängigkeit von der Soll- und/oder Ist-Stellung und/oder dem Soll- und/oder Ist-Stellweg der Leitschaufeln, empirisch und/oder auf Basis einer Simulation und/oder auf Basis eines Mittelwerts der erfassten Lasten, insbesondere eines unter Nicht-Berücksichtigung von Ausreißern ermittelten Mittelwerts der erfassten Lasten, vorgegeben werden bzw. sein, insbesondere einem solchen Mittelwert entsprechen. Gleichermaßen kann die Referenzlast auch gleich Null sein. Eine Ermittlung unter Nicht-Berücksichtigung von Ausreißern kann in einer Ausführung nach an sich bekannten statistischen Verfahren erfolgen.

Somit wird in einer Ausführung die Trennkupplung eines Aktuators geöffnet, falls eine erfasste Last in diesem Aktuator bzw. eine erfasste Last in der Kopplung zwischen diesem Aktuator und dem Koppelring außerhalb eines vorgegebenen Toleranzbereichs bzw. einer vorgegebenen Bandbreite liegt bzw. diese(n) überschreitet. Dies ist besonders vorteilhaft bei einer statischen Überbestimmtheit der Aktuatoren möglich.

In einer Ausführung kann ein fehlerhafter, insbesondere blockierter bzw. blockierender, Aktuator bzw. ein bzw. der vorgegebene(r) Zustand dieses Aktuators auch auf Basis einer Änderung der erfassten Last(en), auf Basis der erfassten Stellung(en) und/oder deren Änderung(en) erfasst und die Trennkupplung dieses Aktuators in einem solchen Fall geöffnet werden.

So kann beispielsweise die Trennkupplung eines Aktuators geöffnet werden, wenn dessen erfasste Stellung(sänderung) über eine vorgegebene zulässige Abweichung hinaus von einer Soll-Stellung(sänderung) abweicht oder eine Änderung einer erfasste Last in diesem Aktuator bzw. in der Kopplung zwischen diesem Aktuator und dem Koppelring über eine vorgegebene zulässige Abweichung hinaus von Laständerungen bei den anderen Aktuatoren abweicht.Entsprechend wird in einer Ausführung ein bzw. der vorgegebener Zustand eines Aktuators erfasst und in einer Weiterbildung dessen Trennkupplung geöffnet,
- falls eine erfasste Stellung diese Aktuators außerhalb eines vorgegebenen Toleranzbereichs, insbesondere eines vorgegebenen Toleranzbereichs um eine Referenzstellung liegt; und/oder
- falls eine erfasste Stellungsänderung diese Aktuators außerhalb eines vorgegebenen Toleranzbereichs, insbesondere eines vorgegebenen Toleranzbereichs um eine Referenzstellungsänderung, liegt; und/oder
- falls eine erfasste Last in diesem Aktuator außerhalb eines vorgegebenen Toleranzbereichs, insbesondere eines vorgegebenen Toleranzbereichs um eine Referenzlast liegt; und/oder
- falls eine erfasste Laständerung in diesem Aktuator außerhalb eines vorgegebenen Toleranzbereichs, insbesondere eines vorgegebenen Toleranzbereichs um eine Referenzlaständerung, liegt; und/oder
- falls eine erfasste Last in der Kopplung zwischen diesem Aktuator und dem Koppelring außerhalb eines vorgegebenen Toleranzbereichs, insbesondere eines vorgegebenen Toleranzbereichs um eine Referenzlast liegt; und/oder
- falls eine erfasste Laständerung in der Kopplung zwischen diesem Aktuator und dem Koppelring außerhalb eines vorgegebenen Toleranzbereichs, insbesondere eines vorgegebenen Toleranzbereichs um eine Referenzlaständerung, liegt.

Nach einer Ausführung der vorliegenden Erfindung ist eine Steuerung, insbesondere hard- und/oder softwaretechnisch, zur Durchführung eines hier beschriebenen Verfahrens bzw. Steuerung einer hier beschriebenen Verstelleinrichtung eingerichtet und/oder weist Mittel zum Steuern von wenigstens zwei der Aktuatoren der Verstelleinrichtung auf Basis erfasster Stellungen der Aktuatoren und/oder Lasten in den Kopplungen zwischen den Aktuatoren und dem Koppelring und/oder zum Öffnen wenigstens einer Trennkupplung eines Aktuators, falls ein vorgegebener Zustand dieses Aktuators erfasst oder prognostiziert wird, auf.

Entsprechend weist in einer Ausführung Steuerung bzw. ihr(e) Mittel auf: Mittel zum Erfassen eines bzw. des vorgegebenen Zustands eines Aktuators, falls eine erfasste Stellung und/oder Stellungsänderung diese Aktuators außerhalb eines vorgegebenen Toleranzbereichs, insbesondere eines vorgegebenen Toleranzbereichs um eine Referenzstellung bzw. Referenzstellungsänderung, liegt und/oder falls eine erfasste Last und/oder Laständerung in diesem Aktuator oder der Kopplung zwischen diesem Aktuator und dem Koppelring außerhalb eines vorgegebenen Toleranzbereichs, insbesondere eines vorgegebenen Toleranzbereichs um eine Referenzlast bzw. Referenzlaständerung, liegt.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere die Verstelleinrichtung steuern kann.

In einer Ausführung werden ein oder mehrere, insbesondere alle, Schritte des Verfahrens vollständig oder teilweise automatisiert durchgeführt, insbesondere durch die Steuerung bzw. ihr(e) Mittel.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1:: ein Leitgitter einer Turbomaschine mit einer Verstelleinrichtung nach einer Ausführung der vorliegenden Erfindung;
- Fig. 2:: einen Aktuator der Verstelleinrichtung; und
- Fig. 3: ein Verfahren zum Steuern der Verstelleinrichtung nach einer Ausführung der vorliegenden Erfindung.

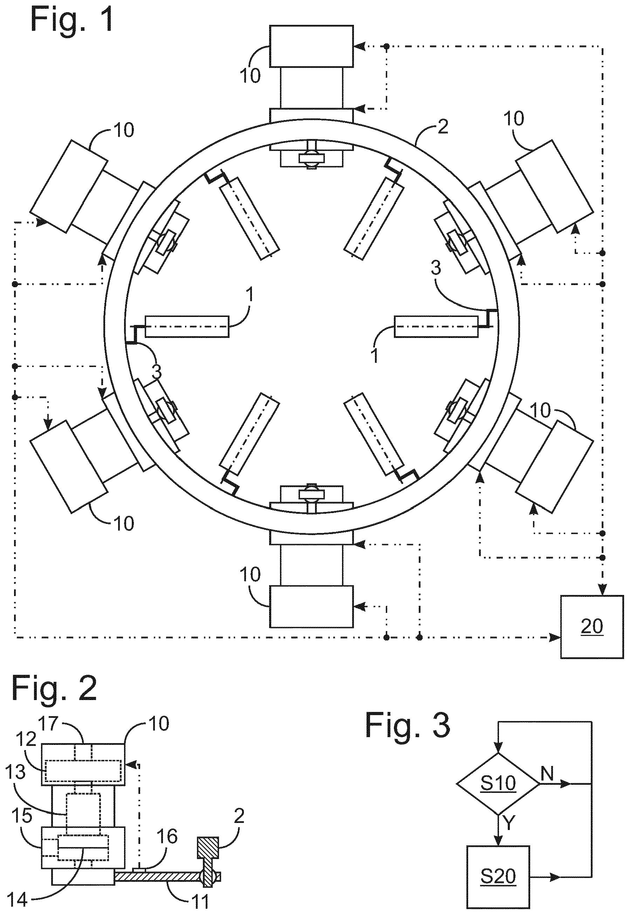

Fig. 1 zeigt ein Leitgitter einer Turbomaschine mit einer Verstelleinrichtung zur Verstellung von Leitschaufeln 1 des Leitgitters der Turbomaschine nach einer Ausführung der vorliegenden Erfindung, wobei die Verstelleinrichtung einen Koppelring 2, an den die Leitschaufeln 1 über Schaufel-Hebelmechanismen 3 derart angekoppelt sind, dass eine Verdrehung des Koppelrings 2 um eine (Haupt)Maschinenachse der Turbomaschine (senkrecht auf der Zeichenebene der Fig. 2) die Leitschaufeln 1 um ihre Schaufellängsachsen (strichpunktiert in Fig. 1) verdreht, und sechs Aktuatoren 10 zum Verdrehen des Koppelrings 2 aufweist, die mit diesem über Aktuator-Hebelmechanismen 11 verbunden und in einem Gehäuse (nicht dargestellt) angeordnet sind.

Jeder der wenigstens im Wesentlichen baugleichen Aktuatoren 10 weist einen elektrischen Antriebsmotor 12, ein spielfreies Untersetzungsgetriebe 13 und eine Trennkupplung 14 auf, die durch ein Stellmittel 15 sowohl unter Last als auch lastfrei aktiv öffenbar ist.

Der Koppelring 2 ist durch die sechs Aktuatoren 10 speichenzentriert und hierzu radial verschieblich und kugelig an deren Aktuator-Hebelmechanismen 11 gelagert.

An den Aktuator-Hebelmechanismen 11 ist jeweils ein Lastsensor 16 mit wenigstens einem DMS zur Erfassung einer Last in der Kopplung zwischen dem jeweiligen Aktuator und dem Koppelring angeordnet.

Eine Steuerung 20 steuert die Aktuatoren 10 redundant auf Basis mittels Drehsensoren 17 erfasster Stellungen der Aktuatoren und mittels Lastsensoren 16 erfasster Lasten in den Kopplungen zwischen den Aktuatoren und dem Koppelring, insbesondere auf Basis eines Vergleichs der Stellungen und Lasten.

Aufgrund der statischen Überbestimmtheit der Speichenzentrierung kann dabei die Steuerung 20 blockierte Antriebe detektierten und öffnet in diesem Fall, d.h. falls ein Fehlerzustand des Aktuators erfasst wird (S10: "Y"), in einem Schritt S20 eines Verfahrens zum Steuern der Verstelleinrichtung nach einer Ausführung der vorliegenden Erfindung dessen Trennkupplung.

Hierzu prüft die Steuerung 20 in Schritt S10, ob eine oder mehrere der erfassten Lasten außerhalb eines vorgegebenen Toleranzbereichs bzw. einer vorgegebenen Bandbreite liegen, detektiert in diesem Fall den bzw. die entsprechende(n) Antrieb(e) als blockiert bzw. fehlerhaft und öffnet entsprechend dessen bzw. deren Trennkupplung(en).

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Leitschaufel
- 2: Koppelring
- 3: Schaufel-Hebelmechanismus
- 10: Aktuator
- 11: Aktuator-Hebelmechanismus
- 12: Antriebsmotor
- 13: Getriebe
- 14: Trennkupplung
- 15: Stellmittel
- 16: Lastsensor
- 17: Drehsensoren
- 20: Steuerung

## Patentansprüche

1. Verstelleinrichtung zur Verstellung von Leitschaufeln (1) eines Leitgitters einer Turbomaschine, insbesondere einer Turbinen- oder Verdichterstufe einer Gasturbine, wobei die Verstelleinrichtung einen Koppelring (2) zur Ankopplung der Leitschaufeln und wenigstens zwei Aktuatoren (10) zum Verdrehen des Koppelrings aufweist, die mit dem Koppelring verbunden sind (11), wobei wenigstens einer dieser Aktuatoren eine Trennkupplung (14) aufweist.

2. Verstelleinrichtung nach dem vorhergehenden Anspruch, **dadurch gekennzeichnet, dass** die Verstelleinrichtung wenigstens drei Aktuatoren (10) zum Verdrehen des Koppelrings (2) aufweist, die mit dem Koppelring verbunden sind (11), wobei wenigstens einer dieser Aktuatoren eine Trennkupplung (14) aufweist.

3. Verstelleinrichtung nach dem vorhergehenden Anspruch, **dadurch gekennzeichnet, dass** die Verstelleinrichtung vier oder mehr Aktuatoren (10) zum Verdrehen des Koppelrings (2) aufweist, die mit dem Koppelring verbunden sind (11), wobei wenigstens einer dieser Aktuatoren eine Trennkupplung (14) aufweist.

4. Verstelleinrichtung nach einem der vorhergehenden Ansprüche, **dadurch gekennzeichnet, dass** der Koppelring, insbesondere in einem Gehäuse der Turbomaschine und/oder durch die wenigstens drei, insbesondere vier oder mehr Aktuatoren, zentriert, insbesondere speichenzentriert, ist.

5. Verstelleinrichtung nach einem der vorhergehenden Ansprüche, **dadurch gekennzeichnet, dass** wenigstens eine Trennkupplung (14) eines Aktuators (10) aktiv, insbesondere elektrisch, hydraulisch oder pneumatisch, und/oder lastfrei und/oder unter Last öffen- und/oder schließbar ist.

6. Verstelleinrichtung nach einem der vorhergehenden Ansprüche, **gekennzeichnet durch** wenigstens einen Lastsensor (16) zur Erfassung einer Last in einem der Aktuatoren (10) oder in einer Kopplung (11) zwischen einem der Aktuatoren (10) und dem Koppelring (2).

7. Leitgitter für eine Turbomaschine, insbesondere eine Turbinen- oder Verdichterstufe einer Gasturbine, das mehrere verstellbare Leitschaufeln (1) und eine Verstelleinrichtung nach einem der vorhergehenden Ansprüche zur Verstellung der Leitschaufeln aufweist.

8. Turbomaschine, insbesondere Gasturbine, mit wenigstens einem Leitgitter nach dem vorhergehenden Anspruch.

9. Verfahren zur Verstellung von Leitschaufeln (1) eines Leitgitters nach Anspruch 7 oder 8, **dadurch gekennzeichnet, dass** wenigstens zwei der Aktuatoren (10) der Verstelleinrichtung auf Basis erfasster Stellungen der Aktuatoren und/oder Lasten in den Aktuatoren und/oder in den Kopplungen zwischen den Aktuatoren und dem Koppelring gesteuert werden und/oder dass wenigstens eine Trennkupplung (14) eines Aktuators geöffnet wird, falls ein vorgegebener Zustand dieses Aktuators erfasst oder prognostiziert wird.

10. Verfahren nach dem vorhergehenden Anspruch, **dadurch gekennzeichnet, dass** ein vorgegebener Zustand dieses Aktuators erfasst wird, falls eine erfasste Stellung und/oder Stellungsänderung dieses Aktuators und/oder eine erfasste Last und/oder Laständerung in diesem Aktuator und/oder der Kopplung zwischen diesem Aktuator und dem Koppelring außerhalb eines vorgegebenen Toleranzbereichs liegt.

11. Steuerung (20) zur Verstellung von Leitschaufeln (1) eines Leitgitters nach Anspruch 7 oder 8, **dadurch gekennzeichnet, dass** sie zur Durchführung eines Verfahrens nach Anspruch 9 oder 10 eingerichtet ist und/oder Mittel zum Steuern von wenigstens zwei der Aktuatoren (10) der Verstelleinrichtung auf Basis erfasster Stellungen der Aktuatoren und/oder Lasten in den Kopplungen zwischen den Aktuatoren und dem Koppelring (2) und/oder Öffnen wenigstens einer Trennkupplung (14) eines Aktuators (10), falls ein vorgegebener Zustand dieses Aktuatoren erfasst oder prognostiziert wird, aufweist.
